# EUROPEAN PATENT SPECIFICATION

(11) **EP 4 682 506 B1**
(45) Date of publication and mention of the grant of the patent: **13.05.2026**
(21) Application number: 25157093.3
(22) Date of filing: 11.02.2025
(51) Int. Cl.: G01N 3/303

(54) **BOTTOM GUARD PLATE TESTING DEVICE FOR BATTERY PACK**
BODENSCHUTZPLATTENTESTVORRICHTUNG FÜR BATTERIEPACK
DISPOSITIF DE TEST DE PLAQUE DE PROTECTION INFÉRIEURE POUR BLOC-BATTERIE

(30) Priority: 17.07.2024 CN 202421699147 U; 09.08.2024 WO PCT/CN2024/110950
(43) Date of publication of application: 21.01.2026
(73) Proprietor: Eve Energy Co., Ltd., Huizhou, Guangdong 516006 (CN)
(72) Inventor: Huang, Shenhua, Guangdong, 516006 (CN)
(74) Representative: Grünecker Patent- und Rechtsanwälte PartG mbB

(56) References cited:
- CN-B- 105 387 983
- CN-U- 219 495 616
- KR-B1- 101 335 254

## Description

### TECHNICAL FIELD

The present application relates to the technical field of battery pack testing equipment, for example, to a bottom guard plate testing device for a battery pack.

### BACKGROUND

With the rapid development of the new energy battery industry, the safety requirements for batteries are becoming increasingly higher. In the long-term use of an electric vehicle battery pack, the physical strength and anti-collision impact strength of the battery pack are becoming increasingly important. There have been a large number of new energy vehicles on the market that have caused battery pack fires due to bottoming, which seriously threatens the life and property safety of drivers and passengers. Therefore, the strength of the bottom guard plate of the battery pack is particularly important. CN219495616U discloses a battery pack impact test device for an electric automobile, which has an impact head set at a bottom of separating mechanism, wherein a lower part of impact test frame is provided with the battery pack, and the impact head performs an impact test on the battery pack.

There is currently no national standard of bottom guard plate protection for new energy battery packs, and the main test is based on the overall standard of the battery pack.

### SUMMARY

The overall test of the battery pack has a very high cost and a low efficiency, and the economic cost and time cost of the test are too high, so it is not suitable for large-scale material testing. Moreover, the overall test of the battery pack is difficult to reflect the impact resistance and deformation resistance of the bottom guard plate separately, which is not conducive to the preliminary design of the bottom guard plate of the battery pack.

A bottom guard plate testing device for a battery pack according to the present application can realize testing for performances such as impact resistance and deformation resistance of the bottom guard plate and realize the quantification of design parameters and standards for the strength performance of the bottom guard plate.

A bottom guard plate testing device for a battery pack is provided, which includes a pedestal and a test mechanism. The pedestal is configured to place a bottom guard plate, the pedestal is provided with a measuring recess, a pressure sensor or a plastically deformable member is arranged in the measuring recess, and a cushion block is arranged on the pedestal. The bottom guard plate and the pedestal are spaced apart by the cushion block to form an impact cavity, and the measuring recess is located in the impact cavity. The test mechanism includes a test bracket and an impact assembly, the test bracket and the impact assembly are arranged on one side of the pedestal, the impact assembly is suspended on the test bracket, and the impact assembly is located directly above the pedestal.

Beneficial effects of the present application are as follows: in the bottom guard plate testing device for a battery pack according to the present application, by mounting the cushion block on the pedestal, and then placing the to-be-tested bottom guard plate on the cushion block, the bottom guard plate is spaced apart from the pedestal by the cushion block to form an impact cavity. Then, the impact assembly is lifted by the test bracket arranged on one side of the pedestal, and the impact assembly is located directly above the pedestal, that is, the impact assembly is located directly above the bottom guard plate, so that the impact assembly falls vertically from the test bracket to perform an impact collision test on the bottom guard plate. During the test, multiple to-be-tested bottom guard plates of uniform specifications are prepared, and the pressure sensor or the plastically deformable member is placed in the measuring recess of the pedestal, so as to measure the corresponding impact force value through the pressure sensor, and measure the deformation value of the bottom guard plate after the impact through the plastically deformable member, thus realizing data testing for the impact on the bottom guard plate, which is conducive to data quantification, and is convenient for designing the strength standard of the bottom guard plate of the corresponding battery pack according to the corresponding test data and convenient for selecting the bottom guard plate according to the corresponding test data, so as to ensure that the bottom guard plate can provide sufficient support and impact resistance for the battery pack in practical application, and ensure the safety of the battery pack in use.

### BRIEF DESCRIPTION OF THE DRAWINGS

FIG. 1 is a schematic structural diagram of a bottom guard plate testing device for a battery pack according to an embodiment of the present application;
FIG. 2 is a schematic structural diagram of a pedestal according to an embodiment of the present application;
FIG. 3 is a schematic structural diagram of a bottom surface of a pedestal according to an embodiment of the present application;
FIG. 4 is a schematic structural diagram of a pressure sensor according to an embodiment of the present application;
FIG. 5 is a schematic structural diagram of a vertical support rod according to an embodiment of the present application;
FIG. 6 is a schematic structural diagram showing the connection between an impact assembly and a horizontal support rod according to an embodiment of the present application;
FIG. 7 is a schematic structural diagram of another bottom guard plate testing device for a battery pack according to an embodiment of the present application; and
FIG. 8 is a schematic structural diagram of another bottom guard plate testing device for a battery pack according to an embodiment of the present application.

Reference list:
100 pedestal
110 measuring recess
120 wire slot
130 first mounting hole
200 test mechanism
210 test bracket
211 vertical support rod
211a fixed bar
211b movable bar
2111 height scale
2112 first positioning hole
2113 second positioning hole
2114 latch
212 horizontal support rod
213 pulley
214 connecting rope
220 impact assembly
221 impact carrier
222 impact head
2221 impact part
230 base
240 reinforcing rib structure
300 bottom guard plate
310 third mounting hole
400 pressure sensor
410 connecting wire
500 plastically deformable member
600 cushion block
610 second mounting hole

### DETAILED DESCRIPTION

The present application is further described in detail hereinafter in conjunction with the drawings and embodiments. It can be understood that the embodiments described herein are intend to interpret the present application and not to qualify the present application. It should also be noted that, for the sake of description, only some of the structures related to the present application rather than all structures are shown in the drawings.

In the description of this application, it is to be noted that, unless otherwise expressly specified and limited, the terms "connected to each other", "connected" or "fixed" are to be construed in a broad sense, for example, as permanently connected or detachably connected or integrally formed; mechanically connected or electrically connected; directly connected to each other or indirectly connected to each other via an intermediary; or internally connection of two components or interaction relationship between two components. For the person of ordinary skill in the art, meanings of the terms in the present application may be construed based on situations.

In the present application, unless otherwise expressly specified and limited, when a first feature is described as "above" or "below" a second feature, the first feature and the second feature may be in direct contact, or be in contact via another feature between the two features. Moreover, when the first feature is described as "on", "above" or "over" the second feature, the first feature may be right on, above or over the second feature or the first feature may be obliquely on, above or over the second feature, or the first feature may be at a higher level than the second feature. When the first feature is described as "under", "below" or "underneath" the second feature, the first feature may be right under, below or underneath the second feature or the first feature may be obliquely under, below or underneath the second feature, or the first feature may be at a lower level than the second feature.

In the description of this article, it should be understood that the orientation or position relationships indicated by the terms such as "upper", "lower", "right", etc., are based on the orientation or position relationship shown in the drawings, which is only for the convenience of description and simplification of operation, and does not indicate or imply that the device or element referred to must have a specific orientation, be constructed and operated in a specific orientation, and therefore cannot be understood as a limitation of the present application. Furthermore, the terms "first" and "second" are used to distinguish in the description and have no special meaning.

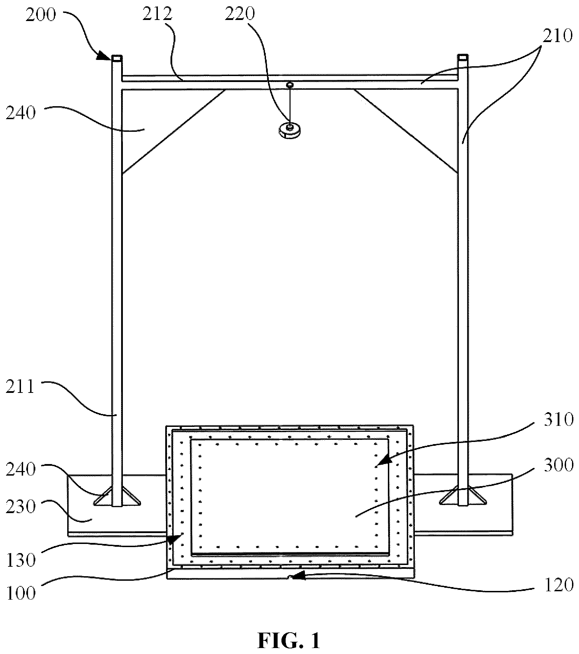

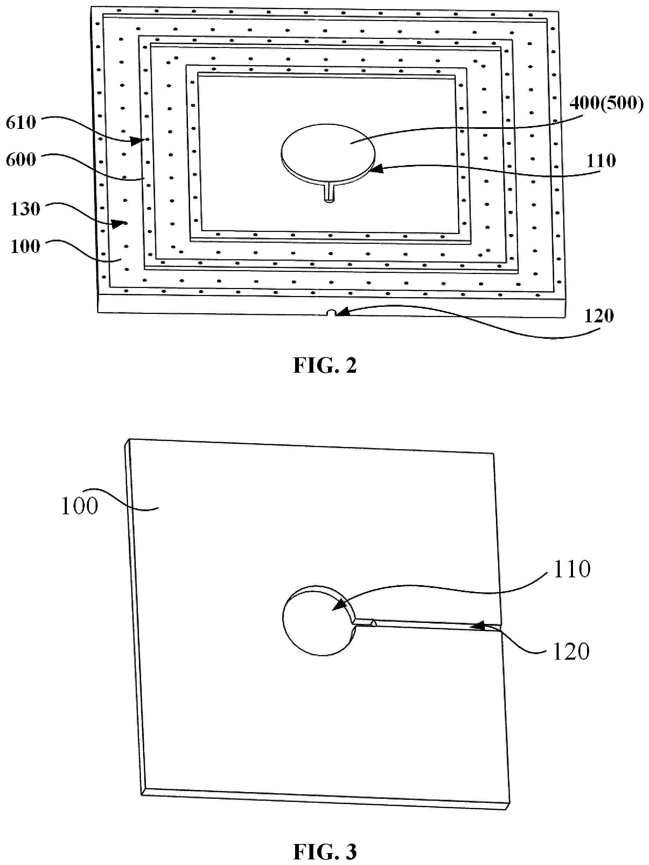

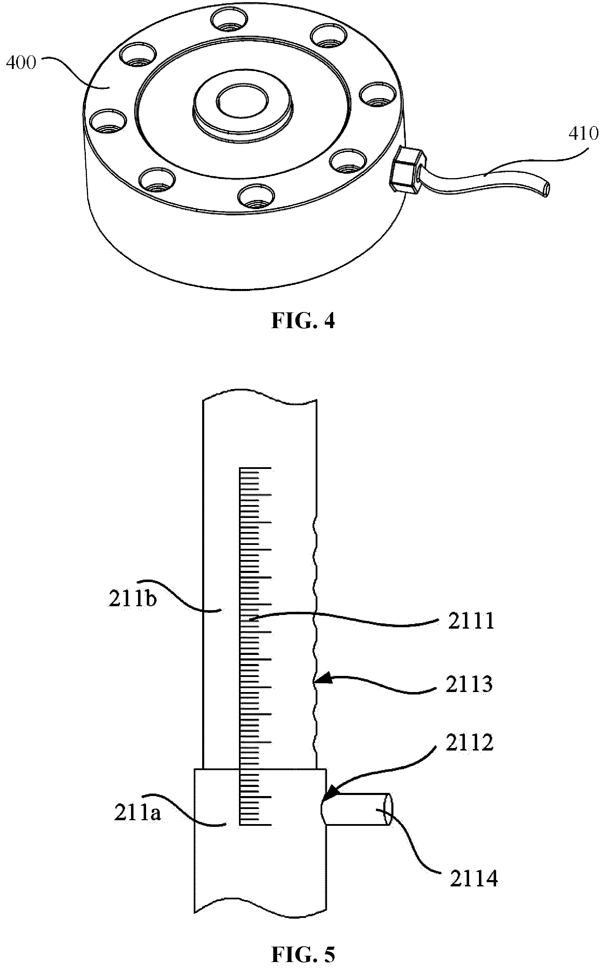

As shown in FIG. 1 to FIG. 6, a bottom guard plate testing device for a battery pack according to this embodiment includes a pedestal 100 and a test mechanism 200. The pedestal 100 is configured to place a bottom guard plate 300, the pedestal 100 is provided with a measuring recess 110, a pressure sensor 400 or a plastically deformable member 500 is arranged in the measuring recess 110, and a cushion block 600 is arranged on the pedestal 100. The bottom guard plate 300 and the pedestal 100 are spaced apart by the cushion block 600 to form an impact cavity, and the measuring recess 110 is located in the impact cavity. The test mechanism 200 includes a test bracket 210 and an impact assembly 220, the test bracket 210 and the impact assembly 220 are arranged on one side of the pedestal 100, the impact assembly 220 is suspended on the test bracket 210, and the impact assembly 220 is located directly above the pedestal 100.

In this embodiment, by mounting the cushion block 600 on the pedestal 100, and then placing the to-be-tested bottom guard plate 300 on the cushion block 600, the bottom guard plate 300 is spaced apart from the pedestal by the cushion block 600 to form an impact cavity. Then, the impact assembly 220 is lifted by the test bracket 210 arranged on one side of the pedestal 100, and the impact assembly 220 is located directly above the pedestal 100, that is, the impact assembly 220 is located directly above the bottom guard plate 300, so that the impact assembly 220 falls vertically from the test bracket 210 to perform an impact collision test on the bottom guard plate 300. During the test, multiple to-be-tested bottom guard plates 300 of uniform specifications are prepared, and the pressure sensor 400 or the plastically deformable member 500 is placed in the measuring recess 110 of the pedestal 100, so as to measure the corresponding impact force value through the pressure sensor 400, and measure the deformation value of the bottom guard plate 300 after the impact through the plastically deformable member 500, thus realizing data testing for the impact on the bottom guard plate 300, which is conducive to data quantification, and is convenient for designing the strength standard of the bottom guard plate 300 of the corresponding battery pack according to the corresponding test data and convenient for selecting the bottom guard plate 300 according to the corresponding test data, so as to ensure that the bottom guard plate 300 can provide sufficient support and impact resistance for the battery pack in practical application, and ensure the safety of the battery pack in use.

In one or more embodiments, the test mechanism 200 further includes a base 230, the base 230 is arranged on the other side of the pedestal 100, and the test bracket 210 is detachably mounted on the base 230, so that the test brackets 210 of different specifications can be replaced according to the test requirements of different bottom guard plates 300 to meet the corresponding test requirements, which is convenient and flexible for testing a variety of bottom guard plates 300, and enables the test mechanism 200 to have a strong versatility.

In one or more embodiments, the test bracket 210 includes a vertical support rod 211 and a horizontal support rod 212 connected to each other, the impact assembly 220 is connected to the horizontal support rod 212, the horizontal support rod 212 is connected to the vertical support rod 211, and an end of the vertical support rod 211 facing away from the horizontal support rod 212 is connected to the base 230.

In one or more embodiments, the test bracket 210 includes two vertical support rods 211, and two ends of the horizontal support rod 212 are respectively connected to the two vertical support rods 211 to form a door-shaped test bracket 210. The impact assembly 220 is hoisted on the horizontal support rod 212 of the gantry-shaped test bracket 210, and the impact assembly 220 is located directly above the pedestal 100, so that the impact assembly 220 falls vertically to perform an impact test on the bottom guard plate 300 on the pedestal 100.

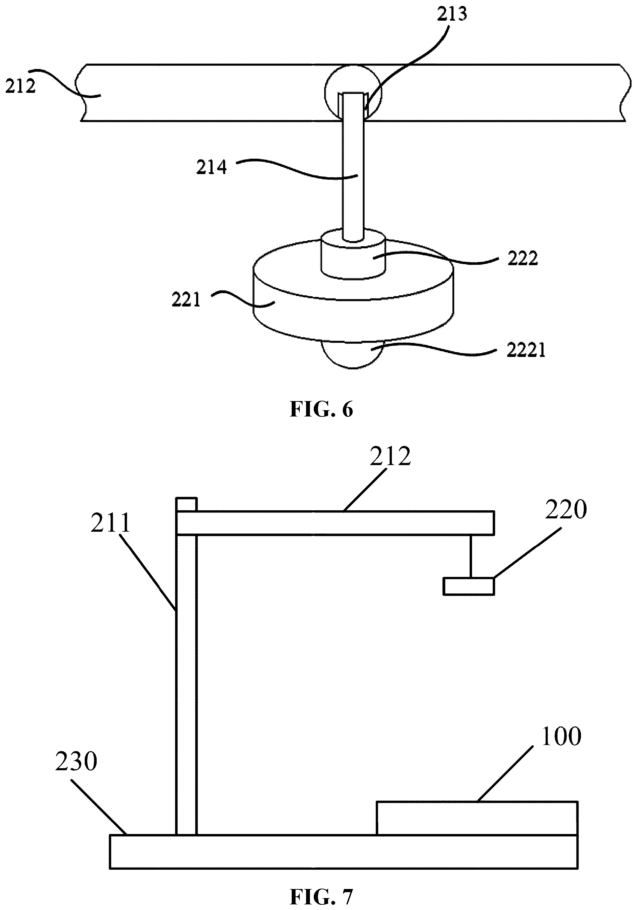

In one or more embodiments, as shown in FIG. 7, the test bracket 210 includes a vertical support rod 211, and one end of the horizontal support rod 212 is connected to the vertical support rod 211. The test bracket 210 is a r-shaped structure, that is, an inverted L-shaped structure. The impact assembly 220 is suspended on one end of the horizontal support rod 212 facing away from the vertical support rod 211, and the impact assembly 220 is located directly above the pedestal 100, so that the impact assembly 220 falls vertically to perform an impact test on the bottom guard plate 300 on the pedestal 100.

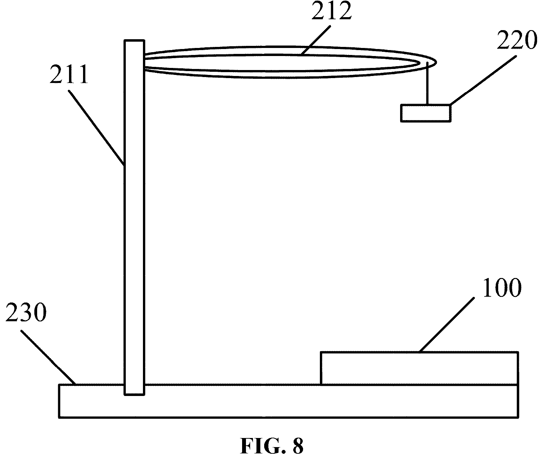

In one or more embodiments, as shown in FIG. 8, the test bracket 210 includes a vertical support rod 211, a horizontal support rod 212 is configured to be bent into an arc-shaped structure, and two ends of the horizontal support rod 212 are connected to the vertical support rod 211 and the two ends of the horizontal support rod 212 are located at the same horizontal level. The impact assembly 220 is suspended on the horizontal support rod 212 at a position opposite to the vertical support rod 211, and the impact assembly 220 is located directly above the pedestal 100, so that the impact assembly 220 falls vertically to perform an impact test on the bottom guard plate 300 on the pedestal 100.

In order to ensure the stability of the test bracket 210, a reinforcing rib structure 240 is provided at each of the connection between the vertical support rod 211 and the base 230 and the connection between the vertical support rod 211 and the horizontal support rod 212, so as to ensure the overall stability of the test bracket 210, thereby ensuring the stability of the entire test operation.

In one or more embodiments, the vertical support rod 211 includes a fixed bar 211a and a movable bar 211b, the fixed bar 211a is fixedly connected to the base 230, one end of the movable bar 211b is telescopically connected to the fixed bar 211a, and the other end of the movable bar 211b is fixedly connected to the horizontal support rod 212. During the test, according to the energy law, the movable bar 211b may be adjusted to move telescopically on the fixed bar 211a depending on the required impact amount, so as to adjust the height of the horizontal support rod 212, that is, to adjust the height of the impact assembly 220 suspended on the horizontal support rod 212, so that the impact assembly 220 reaches a corresponding impact amount on the bottom guard plate 300 when it falls vertically, and the impact force value and deformation value of the bottom guard plate 300 under the impact of a specific impact amount are obtained.

A height scale 2111 is provided on the vertical support rod 211. The height scale 2111 may be provided on each of the fixed bar 211a and the movable bar 211b, or only on the movable bar 211b, so that when the movable bar 211b is adjusted to move relative to the fixed bar 211a, the height of the horizontal support rod 212 connected to the movable bar 211b, that is, the height of the impact assembly 220, is accurately obtained, and the height of the impact assembly 220 is adjusted accordingly according to a preset impact amount. The fixed bar 211a is provided with a first positioning hole 2112, and the movable bar 211b is provided with multiple second positioning holes 2113 corresponding to the first positioning hole 2112. When the movable bar 211b moves relative to the fixed bar 211a to the corresponding position, a fixing member such as a latch 2114 is passed through the first positioning hole 2112 and the second positioning hole 2113 to achieve the fixed positioning of the movable bar 211b relative to the fixed bar 211a, so that the horizontal support rod 212 connected to the movable bar 211b and the impact assembly 220 suspended on the horizontal support rod 212 are maintained at a fixed height.

In one or more embodiments, the impact assembly 220 includes an impact carrier 221 and an impact head 222, the impact head 222 is inserted through the impact carrier 221 in a direction toward the pedestal 100, and the impact head 222 is provided with a hemispherical, conical or truncated cone-shaped impact part 2221 on a side facing the pedestal 100.

In one or more embodiments, the test bracket 210 is provided with a pulley 213, and the impact assembly 220 is connected to the pulley 213 through a connecting rope 214 to be suspended on the test bracket 210. By adopting the connection with the pulley 213, the impact assembly 220 is connected to the pulley 213 through the connecting rope 214 to slide. The pulley 213 can play a certain role in limiting the vertical fall of the impact assembly 220, and ensure that the impact assembly 220 falls vertically through the connecting rope 214 along the rolling groove of the pulley 213, which is conducive to avoiding the deviation of the impact assembly 220 during the fall. Further, through the connection with the pulley 213, the impact assembly 220 can maintain a smooth fall while falling vertically, and reduce the energy loss of the impact assembly 220 during the fall, thereby reducing the adverse effect on the test results and ensuring the accuracy of the test results.

In one or more embodiments, the pressure sensor 400 is placed in the measuring recess 110 and is spaced apart from the bottom guard plate 300, and an end surface of the pressure sensor 400 facing the bottom guard plate 300 is flush with an end surface of the pedestal 100 facing the bottom guard plate 300, so as to reserve a certain deformation amplitude of the bottom guard plate 300 in the impact cavity after being impacted, and simulate the actual situation that the battery module is subjected to the impact force transmitted by the bottom guard plate 300 when the bottom guard plate 300 is impacted, so that the impact force value transmitted to the battery module when the bottom guard plate 300 is impacted by the test is closer to the actual impact value, thereby improving the accuracy of the test.

In one or more embodiments, the pedestal 100 is provided with a wire slot 120, one end of the wire slot 120 is in communication with the measuring recess 110, and the other end of the wire slot 120 extends through one side edge of the pedestal 100, so that the pressure sensor 400 is mounted in the measuring recess 110, and a connecting wire 410 of the pressure sensor 400 can be guided to the outside of the pedestal 100 through the wire slot 120, and connected to a data terminal or a control terminal to achieve data transmission and recording. By providing the wire slot 120 on the pedestal 100, it is possible to avoid the connecting wire 410 of the pressure sensor 400 interfering with the flatness of the pedestal 100, keep the pedestal 100 horizontally placed, and improve the accuracy of the test.

In one or more embodiments, the plastically deformable member 500 is filled in the measuring recess 110 and is spaced apart from the bottom guard plate 300, and an end surface of the plastically deformable member 500 facing the bottom guard plate 300 is flush with the end surface of the pedestal 100 facing the bottom guard plate 300, to simulate the actual situation that the battery module is subjected to the impact force transmitted by the bottom guard plate 300 when the bottom guard plate 300 is impacted, so as to obtain the degree of influence of the deformation value of the bottom guard plate 300 after the impact on the battery module in the practical situation, thereby improving the accuracy of the test. In practical operation, the plastically deformable member 500 is ultra-light clay, which is soft and has strong moldability, and is able to accurately and effectively reflect the deformation of the bottom guard plate 300. In addition, the ultra-light clay is able to be reused repeatedly, which is safe and environmentally friendly. Of course, in addition to this embodiment, other plastically deformable members 500 such as a plastically deformable rubber may also be used, as long as the plastic deformation of the plastically deformable member 500 is able to be used to measure and reflect the deformation of the bottom guard plate 300, such designs fall into the protection scope of this application.

In one or more embodiments, the pedestal 100 and the cushion block 600 are detachably connected, the pedestal 100 is provided with multiple first mounting holes 130, the cushion block 600 is provided with multiple second mounting holes 610 corresponding to the first mounting holes 130, and the bottom guard plate 300 is provided with third mounting holes 310 corresponding to the first mounting holes 130 and the second mounting holes 610 respectively. The bottom guard plate 300 is generally provided with the third mounting holes 310 for installation and connection with the battery pack box, so that according to the third mounting holes 310 in the bottom guard plate 300, the first mounting holes 130 and the second mounting holes 610 corresponding to the positions of the third mounting holes 310 are provided, to allow the bottom guard plate 300 to be mounted and fixed to the pedestal 100 and the cushion block 600.

In practical operation, the bottom guard plate 300 of the rectangular battery pack is taken as an example, the bottom guard plate 300 has a rectangular plate surface, and the third mounting holes 310 in the bottom guard plate 300 are arranged along the four edges of the bottom guard plate 300. The cushion block 600 is in a character " 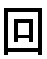 " shape, to allow the second mounting holes 610 in the cushion block 600 to be arranged corresponding to the third mounting holes 310, and the first mounting holes 130 in the pedestal 100 to also be arranged corresponding to the second mounting holes 610 and the third mounting holes 310, so as to ensure that the bottom guard plate 300, the cushion block 600 and the pedestal 100 are mounted and fixed.

The pedestal 100 is provided with multiple groups of first mounting holes 130 arranged in a rectangular array, so that it is possible to, according to the sizes of the bottom guard plates 300 of different specifications, adopt a group of first mounting holes 130 to mount the bottom guard plate 300, and also according to the corresponding specification of the bottom guard plate 300, adopt the cushion block 600 of corresponding size, thereby improving the versatility of the pedestal 100, avoiding the need to provide multiple pedestals 100 corresponding to the bottom guard plates 300 of different specifications, which is conducive to reducing production costs.

## Claims

1. A bottom guard plate testing device for a battery pack, comprising:
a pedestal (100) configured to place a bottom guard plate (300), wherein the pedestal (100) is provided with a measuring recess (110), a pressure sensor (400) or a plastically deformable member (500) is arranged in the measuring recess ( 110), a cushion block (600) is arranged on the pedestal (100), the bottom guard plate (300) and the pedestal (100) are spaced apart by the cushion block (600) to form an impact cavity, and the measuring recess (110) is located in the impact cavity; and
a test mechanism (200) comprising a test bracket (210) and an impact assembly (220), wherein the test bracket (210) and the impact assembly (220) are arranged on a side of the pedestal (100), the impact assembly (220) is suspended on the test bracket (210), and the impact assembly (220) is located directly above the pedestal (100).

2. The bottom guard plate testing device for a battery pack according to claim 1, wherein the test mechanism (200) further comprises a base (230), the base (230) is arranged on another side of the pedestal (100), and the test bracket (210) is detachably mounted on the base (230).

3. The bottom guard plate testing device for a battery pack according to claim 2, wherein the test bracket (210) comprises a vertical support rod (211) and a horizontal support rod (212) connected to each other, the impact assembly (220) is connected to the horizontal support rod (212), the horizontal support rod (212) is connected to the vertical support rod (211), and an end of the vertical support rod (211) facing away from the horizontal support rod (212) is connected to the base (230).

4. The bottom guard plate testing device for a battery pack according to claim 3, wherein the test bracket (210) comprises two vertical support rods (211), and two ends of the horizontal support rod (212) are connected to the two vertical support rods (211) respectively, and the test bracket (210) is a door-shaped structure.

5. The bottom guard plate testing device for a battery pack according to claim 3, wherein the test bracket (210) comprises one vertical support rod (211), an end of the horizontal support rod (212) is connected to the vertical support rod (211), and the test bracket (210) is a r-shaped structure.

6. The bottom guard plate testing device for a battery pack according to claim 3, wherein the test bracket (210) comprises one vertical support rod (211), the horizontal support rod (212) is configured to be bent into an arc-shaped structure, and two ends of the horizontal support rod (212) are connected to the vertical support rod (211) and are located at a same horizontal level.

7. The bottom guard plate testing device for a battery pack according to any one of claims 3 to 6, wherein the vertical support rod (211) comprises a fixed bar (211a) and a movable bar (211b), the fixed bar (211a) is fixedly connected to the base (230), an end of the movable bar (211b) is telescopically connected to the fixed bar (211a), and another end of the movable bar (211b) is fixedly connected to the horizontal support rod (212).

8. The bottom guard plate testing device for a battery pack according to any one of claims 1 to 7, wherein the impact assembly (220) comprises an impact carrier (221) and an impact head (222), the impact head (222) is inserted through the impact carrier (221) in a direction toward the pedestal (100), and the impact head (222) is provided with a hemispherical, conical or truncated cone-shaped impact part (2221) on a side facing the pedestal (100).

9. The bottom guard plate testing device for a battery pack according to any one of claims 1 to 8, wherein the test bracket (210) is provided with a pulley (213), and the impact assembly (220) is connected to the pulley (213) through a connecting rope (214) to be suspended on the test bracket (210).

10. The bottom guard plate testing device for a battery pack according to any one of claims 1 to 9, wherein the pressure sensor (400) is placed in the measuring recess (110) and is spaced apart from the bottom guard plate (300), and an end surface of the pressure sensor (400) facing the bottom guard plate (300) is flush with an end surface of the pedestal (100) facing the bottom guard plate (300).

11. The bottom guard plate testing device for a battery pack according to any one of claims 1 to 10, wherein the pedestal (100) is provided with a wire slot (120), an end of the wire slot (120) is in communication with the measuring recess (110), and another end of the wire slot (120) extends through one side edge of the pedestal (100).

12. The bottom guard plate testing device for a battery pack according to any one of claims 1 to 9, wherein the plastically deformable member (500) is filled in the measuring recess (110) and is spaced apart from the bottom guard plate (300), and an end surface of the plastically deformable member (500) facing the bottom guard plate (300) is flush with an end surface of the pedestal (100) facing the bottom guard plate (300).

13. The bottom guard plate testing device for a battery pack according to any one of claims 1 to 12, wherein the pedestal (100) is detachably connected to the cushion block (600), the pedestal (100) is provided with a plurality of first mounting holes (130), the cushion block (600) is provided with a plurality of second mounting holes (610) corresponding to the first mounting holes (130), and the bottom guard plate (300) is provided with third mounting holes (310) corresponding to the first mounting holes (130) and the second mounting holes (610) respectively.

## Patentansprüche

1. Prüfvorrichtung für eine Batteriepack-Bodenschutzplatte, umfassend:
einen Sockel (100), der ausgelegt ist, um eine Bodenschutzplatte (300) zu platzieren, wobei der Sockel (100) mit einer Messvertiefung (110) versehen ist, ein Drucksensor (400) oder ein plastisch verformbares Element (500) in der Messvertiefung (110) angeordnet ist, ein Pufferblock (600) auf dem Sockel (100) angeordnet ist, die Bodenschutzplatte (300) und der Sockel (100) durch den Pufferblock (600) beabstandet sind, um einen Prallhohlraum zu bilden, und die Messvertiefung (110) in dem Prallhohlraum befindlich ist, und
einen Prüfmechanismus (200), der eine Prüfhalterung (210) und eine Prallanordnung (220) umfasst, wobei die Prüfhalterung (210) und die Prallanordnung (220) auf einer Seite des Sockels (100) angeordnet sind, die Prallanordnung (220) an der Prüfhalterung (210) aufgehängt ist und die Prallanordnung (220) direkt oberhalb des Sockels (100) befindlich ist.

2. Prüfvorrichtung für eine Batteriepack-Bodenschutzplatte nach Anspruch 1, wobei der Prüfmechanismus (200) ferner eine Basis (230) umfasst, die Basis (230) auf einer anderen Seite des Sockels (100) angeordnet ist und die Prüfhalterung (210) lösbar auf der Basis (230) montiert ist.

3. Prüfvorrichtung für eine Batteriepack-Bodenschutzplatte nach Anspruch 2, wobei die Prüfhalterung (210) eine vertikale Stützstange (211) und eine horizontale Stützstange (212) umfasst, die miteinander verbunden sind, die Prallanordnung (220) mit der horizontalen Stützstange (212) verbunden ist, die horizontale Stützstange (212) mit der vertikalen Stützstange (211) verbunden ist und ein von der horizontalen Stützstange (212) abgewandtes Ende der vertikalen Stützstange (211) mit der Basis (230) verbunden ist.

4. Prüfvorrichtung für eine Batteriepack-Bodenschutzplatte nach Anspruch 3, wobei die Prüfhalterung (210) zwei vertikale Stützstangen (211) umfasst und zwei Enden der horizontalen Stützstange (212) jeweils mit den beiden vertikalen Stützstangen (211) verbunden sind und die Prüfhalterung (210) eine Struktur in der Form einer Tür ist.

5. Prüfvorrichtung für eine Batteriepack-Bodenschutzplatte nach Anspruch 3, wobei die Prüfhalterung (210) eine vertikale Stützstange (211) umfasst, ein Ende der horizontalen Stützstange (212) mit der vertikalen Stützstange (211) verbunden sind und die Prüfhalterung (210) eine R-förmige Struktur ist.

6. Prüfvorrichtung für eine Batteriepack-Bodenschutzplatte nach Anspruch 3, wobei die Prüfhalterung (210) eine vertikale Stützstange (211) umfasst, die horizontale Stützstange (212) ausgelegt ist, um in eine bogenförmige Struktur gebogen zu werden, und zwei Enden der horizontalen Stützstange (212) mit der vertikalen Stützstange (211) verbunden sind und in gleicher horizontaler Höhe befindlich sind.

7. Prüfvorrichtung für eine Batteriepack-Bodenschutzplatte nach einem der Ansprüche 3 bis 6, wobei die vertikale Stützstange (211) eine feststehende Stange (211a) und eine bewegbare Stange (211b) umfasst, wobei die feststehende Stange (211a) fest mit der Basis (230) verbunden ist, ein Ende der bewegbaren Stange (211b) teleskopisch mit der feststehenden Stange (211a) verbunden ist und ein anderes Ende der bewegbaren Stange (211b) fest mit der horizontalen Stützstange (212) verbunden ist.

8. Prüfvorrichtung für eine Batteriepack-Bodenschutzplatte nach einem der Ansprüche 1 bis 7, wobei die Prallanordnung (220) einen Prallträger (221) und einen Prallkopf (222) umfasst, der Prallkopf (222) durch den Prallträger (221) in einer Richtung hinführend zu dem Sockel (100) eingefügt ist und der Prallkopf (222) auf einer dem Sockel (100) zugewandten Seite mit einem halbkugelförmigen, kegelförmigen oder stumpfkegelförmigen Prallteil (2221) versehen ist.

9. Prüfvorrichtung für eine Batteriepack-Bodenschutzplatte nach einem der Ansprüche 1 bis 8, wobei die Prüfhalterung (210) mit einer Umlenkrolle (213) versehen ist und die Prallanordnung (220) über ein Verbindungsseil (214) mit der Umlenkrolle (213) verbunden ist, um an der Prüfhalterung (210) aufgehängt zu werden.

10. Prüfvorrichtung für eine Batteriepack-Bodenschutzplatte nach einem der Ansprüche 1 bis 9, wobei der Drucksensor (400) in der Messvertiefung (110) platziert ist und von der Bodenschutzplatte (300) beabstandet ist und eine der Bodenschutzplatte (300) zugewandte Endoberfläche des Drucksensors (400) bündig mit einer der Bodenschutzplatte (300) zugewandten Endoberfläche des Sockels (100) abschließt.

11. Prüfvorrichtung für eine Batteriepack-Bodenschutzplatte nach einem der Ansprüche 1 bis 10, wobei der Sockel (100) mit einem Kabelschlitz (120) versehen ist und ein Ende des Kabelschlitzes (120) mit der Messvertiefung (110) in Kommunikation steht und sich ein anderes Ende des Kabelschlitzes (120) durch eine Seitenkante des Sockels (100) erstreckt.

12. Prüfvorrichtung für eine Batteriepack-Bodenschutzplatte nach einem der Ansprüche 1 bis 9, wobei das plastisch verformbare Element (500) ausfüllend in die Messvertiefung (110) eingebracht ist und von der Bodenschutzplatte (300) beabstandet ist und eine der Bodenschutzplatte (300) zugewandte Endoberfläche des plastisch verformbaren Elements (500) bündig mit einer der Bodenschutzplatte (300) zugewandten Endoberfläche des Sockels (100) abschließt.

13. Prüfvorrichtung für eine Batteriepack-Bodenschutzplatte nach einem der Ansprüche 1 bis 12, wobei der Sockel (100) lösbar mit dem Pufferblock (600) verbunden ist, der Sockel (100) mit einer Vielzahl von ersten Befestigungslöchern (130) versehen ist, der Pufferblock (600) mit einer Vielzahl von zweiten Befestigungslöchern (610) entsprechend den ersten Befestigungslöchern (130) versehen ist und die Bodenschutzplatte (300) mit dritten Befestigungslöchern (310) jeweils entsprechend den ersten Befestigungslöchern (130) und den zweiten Befestigungslöchern (610) versehen ist.

## Revendications

1. Dispositif de test de plaque de protection inférieure pour un bloc-batterie, comprenant :
un socle (100) configuré pour placer une plaque de protection inférieure (300), dans lequel le socle (100) est pourvu d'un évidement de mesure (110), un capteur de pression (400) ou un élément plastiquement déformable (500) est disposé dans l'évidement de mesure (110), un bloc coussin (600) est disposé sur le socle (100), la plaque de protection inférieure (300) et le socle (100) sont espacés l'un de l'autre par le bloc coussin (600) pour former une cavité d'impact, et l'évidement de mesure (110) est situé dans la cavité d'impact ; et
un mécanisme de test (200) comprenant un support de test (210) et un ensemble d'impact (220), dans lequel le support de test (210) et l'ensemble d'impact (220) sont disposés sur un côté du socle (100), l'ensemble d'impact (220) est suspendu sur le support de test (210), et l'ensemble d'impact (220) est situé directement au-dessus du socle (100).

2. Dispositif de test de plaque de protection inférieure pour un bloc-batterie selon la revendication 1, dans lequel le mécanisme de test (200) comprend en outre une base (230), la base (230) est disposée sur un autre côté du socle (100), et le support de test (210) est monté de manière amovible sur la base (230).

3. Dispositif de test de plaque de protection inférieure pour un bloc-batterie selon la revendication 2, dans lequel le support de test (210) comprend une tige de support verticale (211) et une tige de support horizontale (212) reliées l'une à l'autre, l'ensemble d'impact (220) est relié à la tige de support horizontale (212), la tige de support horizontale (212) est reliée à la tige de support verticale (211), et une extrémité de la tige de support verticale (211) orientée dans le sens opposé à la tige de support horizontale (212) est reliée à la base (230).

4. Dispositif de test de plaque de protection inférieure pour un bloc-batterie selon la revendication 3, dans lequel le support de test (210) comprend deux tiges de support verticales (211), et deux extrémités de la tige de support horizontale (212) sont reliées aux deux tiges de support verticales (211) respectivement, et le support de test (210) est une structure en forme de porte.

5. Dispositif de test de plaque de protection inférieure pour un bloc-batterie selon la revendication 3, dans lequel le support de test (210) comprend une tige de support verticale (211), une extrémité de la tige de support horizontale (212) est reliée à la tige de support verticale (211), et le support de test (210) est une structure en forme de r.

6. Dispositif de test de plaque de protection inférieure pour un bloc-batterie selon la revendication 3, dans lequel le support de test (210) comprend une tige de support verticale (211), la tige de support horizontale (212) est configurée pour être pliée selon une structure en forme d'arc, et deux extrémités de la tige de support horizontale (212) sont reliées à la tige de support verticale (211) et sont situées à un même niveau horizontal.

7. Dispositif de test de plaque de protection inférieure pour un bloc-batterie selon l'une quelconque des revendications 3 à 6, dans lequel la tige de support verticale (211) comprend une barre fixe (211a) et une barre mobile (211b), la barre fixe (211a) est reliée de manière fixe à la base (230), une extrémité de la barre mobile (211b) est reliée de manière télescopique à la barre fixe (211a), et une autre extrémité de la barre mobile (211b) est reliée de manière fixe à la tige de support horizontale (212).

8. Dispositif de test de plaque de protection inférieure pour un bloc-batterie selon l'une quelconque des revendications 1 à 7, dans lequel l'ensemble d'impact (220) comprend un mobile d'impact (221) et une tête d'impact (222), la tête d'impact (222) est insérée à travers le mobile d'impact (221) dans une direction vers le socle (100), et la tête d'impact (222) est pourvue d'une partie d'impact hémisphérique, conique ou tronconique (2221) sur un côté faisant face au socle (100).

9. Dispositif de test de plaque de protection inférieure pour un bloc-batterie selon l'une quelconque des revendications 1 à 8, dans lequel le support de test (210) est pourvu d'une poulie (213), et l'ensemble d'impact (220) est relié à la poulie (213) à travers une corde de liaison (214) à suspendre sur le support de test (210).

10. Dispositif de test de plaque de protection inférieure pour un bloc-batterie selon l'une quelconque des revendications 1 à 9, dans lequel le capteur de pression (400) est placé dans l'évidement de mesure (110) et est espacé de la plaque de protection inférieure (300), et une surface d'extrémité du capteur de pression (400) faisant face à la plaque de protection inférieure (300) affleure une surface d'extrémité du socle (100) faisant face à la plaque de protection inférieure (300).

11. Dispositif de test de plaque de protection inférieure pour un bloc-batterie selon l'une quelconque des revendications 1 à 10, dans lequel le socle (100) est pourvu d'une fente pour fil (120), une extrémité de la fente pour fil (120) est en communication avec l'évidement de mesure (110), et une autre extrémité de la fente pour fil (120) s'étend à travers un bord latéral du socle (100).

12. Dispositif de test de plaque de protection inférieure pour un bloc-batterie selon l'une quelconque des revendications 1 à 9, dans lequel l'élément déformable plastiquement (500) est rempli dans l'évidement de mesure (110) et est espacé de la plaque de protection inférieure (300), et une surface d'extrémité de l'élément déformable plastiquement (500) faisant face à la plaque de protection inférieure (300) affleure une surface d'extrémité du socle (100) faisant face à la plaque de protection inférieure (300).

13. Dispositif de test de plaque de protection inférieure pour un bloc-batterie selon l'une quelconque des revendications 1 à 12, dans lequel le socle (100) est relié de manière amovible au bloc coussin (600), le socle (100) est pourvu d'une pluralité de premiers trous de montage (130), le bloc coussin (600) est pourvu d'une pluralité de deuxièmes trous de montage (610) correspondant aux premiers trous de montage (130), et la plaque de protection inférieure (300) est pourvue de troisièmes trous de montage (310) correspondant aux premiers trous de montage (130) et aux deuxièmes trous de montage (610) respectivement.
